# EUROPEAN PATENT APPLICATION

(11) **EP 4 782 287 A1**
(43) Date of publication of application: **29.07.2026**
(21) Application number: 24876084.5
(22) Date of filing: 14.06.2024
(51) Int. Cl.: B60W 20/00, B60W 40/00

(54) **METHOD AND SYSTEM FOR OPTIMIZING ROTATION SPEED OF HYBRID VEHICLE, AND HYBRID VEHICLE**

(30) Priority: 09.10.2023 CN 202311301559
(71) Applicant: Dongfeng Motor Group Co., Ltd., Wuhan, Hubei 430056 (CN)
(72) Inventor: TANG, Xiongwei, Wuhan, Hubei 430056 (CN); ZHANG, Jihai, Wuhan, Hubei 430056 (CN); ZHANG, Shun, Wuhan, Hubei 430056 (CN); JIA, Jiangtao, Wuhan, Hubei 430056 (CN)
(74) Representative: Gille Hrabal Partnerschaftsgesellschaft mbB Patentanwälte
(86) International application number: PCT/CN2024/099323
(87) International publication number: WO 2025/077261

(57) **Abstract**

A method and system for optimizing the rotation speed of a hybrid vehicle, and a hybrid vehicle. The method comprises: collecting an actual gear state signal of a hybrid vehicle; on the basis of the actual gear state signal, determining an actual gear of the hybrid vehicle, and activating a corresponding target rotation speed optimization function on the basis of the actual gear; after the target rotation speed optimization function is activated, collecting driving environment parameters as required; and calculating a target rotation speed optimization value on the basis of the driving environment parameters, and correcting the current target rotation speed of the hybrid vehicle on the basis of the target rotation speed optimization value.

## Description

### Field of the Invention

The present invention relates to the technical field of vehicle control, and in particular relates to a method and system for optimizing a rotation speed of a hybrid vehicle, and a hybrid vehicle.

### Background of the Invention

For a hybrid vehicle based on a planetary gear architecture, it is generally equipped with an engine direct-drive mode, an electric vehicle (EV) drive mode, and an electronic continuously variable transmission (ECVT) power-split mode for driver selection. The engine direct-drive mode is a mode in which the vehicle is directly driven by full engagement of the engine. The EV drive mode is a pure electric drive mode. The ECVT power-split mode controls the motor rotation speed through changing the combination of the planetary gear set, outputs engine power, and distributes the power proportionally to a power battery or a drive motor for hybrid driving. Among the three modes, the ECVT power-split mode has the widest application range and is the most important, and is frequently used to cope with various actual operating conditions.

It is well known that different actual operating conditions require different target rotation speed control strategies. For example, under dimensions such as economy-priority, power-priority, and NVH (Noise, Vibration, Harshness, a comprehensive quality evaluation index)-priority, different target rotation speed controls are required to address respective rotation speed demands. However, in the existing ECVT power-split mode, a single target rotation speed control is still adopted to handle all operating conditions. Such a target rotation speed control approach can no longer meet the requirements of various actual operating conditions, and therefore may easily lead to safety accidents in hybrid vehicles.

### Summary of the Invention

The present invention provides a method and system for optimizing a rotation speed of a hybrid vehicle, and a hybrid vehicle, through activating a corresponding target rotation speed optimization function according to an actual gear of the hybrid vehicle, and, after the target rotation speed optimization function is activated, collecting driving environment parameters as required to calculate a target rotation speed optimization value for correcting a target rotation speed, the target rotation speed control can be adaptively adjusted according to different driving conditions, thereby solving or at least partially solving the technical problem that a single target rotation speed control cannot meet the requirements of various actual operating conditions.

To solve the above technical problem, a first aspect of the present invention discloses a method for optimizing a rotation speed of a hybrid vehicle, and the method comprises:
collecting an actual gear state signal of a hybrid vehicle;
determining an actual gear of the hybrid vehicle according to the actual gear state signal, and activating a corresponding target rotation speed optimization function according to the actual gear;
after the target rotation speed optimization function is activated, collecting driving environment parameters as required; and
calculating a target rotation speed optimization value according to the driving environment parameters, and correcting a current target rotation speed of the hybrid vehicle according to the target rotation speed optimization value.

Optionally, after the target rotation speed optimization function is activated, the step of collecting driving environment parameters as required specifically comprises:
if the target rotation speed optimization function is a rotation speed optimization function for a forward gear D, collecting first driving environment parameters; wherein the first driving environment parameters comprise: an actual vehicle speed, an actual wheel-side torque, an actual state-of-charge of a power battery, an actual engine water temperature, an actual engine intake air temperature, an actual engine intake air pressure, and an actual driving mode.

Optionally, if the target rotation speed optimization function is the rotation speed optimization function for the forward gear D, the step of calculating the target rotation speed optimization value according to the driving environment parameters specifically comprises:
calculating a power consumption-related rotation speed optimization value, a power-related rotation speed optimization value, and a quality evaluation-related rotation speed optimization value based on the first driving environment parameters; and
determining the target rotation speed optimization value from the power consumption-related rotation speed optimization value, the power-related rotation speed optimization value, and the quality evaluation-related rotation speed optimization value.

Optionally, the step of calculating the power consumption-related rotation speed optimization value based on the first driving environment parameters specifically comprises:
respectively utilizing the actual wheel-side torque, the actual engine water temperature, and the actual engine intake air temperature in combination with the actual vehicle speed to calculate a power compensation rotation speed optimization value, a water temperature compensation rotation speed optimization value, and an air temperature compensation rotation speed optimization value;
utilizing a state-of-charge deviation value between the actual state-of-charge of the power battery and a calibrated state-of-charge value to calculate a state-of-charge compensation rotation speed optimization value; and
summing the power compensation rotation speed optimization value, the water temperature compensation rotation speed optimization value, the air temperature compensation rotation speed optimization value, and the state-of-charge compensation rotation speed optimization value to obtain the power consumption-related rotation speed optimization value.

Optionally, the step of respectively utilizing the actual wheel-side torque, the actual engine water temperature, and the actual engine intake air temperature in combination with the actual vehicle speed to calculate a power compensation rotation speed optimization value, a water temperature compensation rotation speed optimization value, and an air temperature compensation rotation speed optimization value specifically comprises:
calculating an actual demanded power according to the actual vehicle speed and the actual wheel-side torque; and
obtaining the power compensation rotation speed optimization value from a prestored rotation speed mapping relationship according to the actual vehicle speed and the actual demanded power.

Optionally, the step of respectively utilizing the actual wheel-side torque, the actual engine water temperature, and the actual engine intake air temperature in combination with the actual vehicle speed to calculate the power compensation rotation speed optimization value, the water temperature compensation rotation speed optimization value, and the air temperature compensation rotation speed optimization value specifically comprises:
obtaining the water temperature compensation rotation speed optimization value from a prestored rotation speed mapping relationship according to the actual vehicle speed and the actual engine water temperature.

Optionally, the step of respectively utilizing the actual wheel-side torque, the actual engine water temperature, and the actual engine intake air temperature in combination with the actual vehicle speed to calculate the power compensation rotation speed optimization value, the water temperature compensation rotation speed optimization value, and the air temperature compensation rotation speed optimization value specifically comprises:
obtaining the air temperature compensation rotation speed optimization value from a prestored rotation speed mapping relationship according to the actual vehicle speed and the actual engine intake air temperature.

Optionally, the step of utilizing the state-of-charge deviation value between the actual state-of-charge of the power battery and the calibrated state-of-charge value to calculate the state-of-charge compensation rotation speed optimization value specifically comprises:
obtaining the state-of-charge compensation rotation speed optimization value from a prestored rotation speed mapping relationship according to the state-of-charge deviation value and the actual demanded power.

Optionally, the step of calculating the power-related rotation speed optimization value based on the first driving environment parameters specifically comprises:
obtaining the power-related rotation speed optimization value from a prestored rotation speed mapping relationship according to the actual vehicle speed and the actual engine intake air pressure.

Optionally, the step of calculating the quality evaluation-related rotation speed optimization value based on the first driving environment parameters specifically comprises:
determining whether the actual driving mode is a sport mode;
if so, obtaining the quality evaluation-related rotation speed optimization value from a prestored rotation speed mapping relationship according to the actual vehicle speed and the actual driving mode.

Optionally, after the target rotation speed optimization function is activated, the step of collecting driving environment parameters as required specifically comprises:
if the target rotation speed optimization function is a rotation speed optimization function for a parking gear P or a neutral gear N, collecting second driving environment parameters; wherein the second driving environment parameters comprise: an actual vehicle speed and an actual state-of-charge of a power battery.

Optionally, if the target rotation speed optimization function is the rotation speed optimization function for the parking gear P or the neutral gear N, the step of calculating the target rotation speed optimization value according to the driving environment parameters specifically comprises:
calculating a state-of-charge deviation value between the actual state-of-charge of the power battery and a calibrated state-of-charge value; and
obtaining the target rotation speed optimization value from a prestored rotation speed mapping relationship according to the actual vehicle speed and the state-of-charge deviation value.

Optionally, the step of correcting the current target rotation speed of the hybrid vehicle according to the target rotation speed optimization value specifically comprises:
adding the target rotation speed optimization value to the current target rotation speed.

A second aspect of the present invention discloses a system for optimizing a rotation speed of a hybrid vehicle, and the system comprises:
a first collecting module, which is configured to collect an actual gear state signal of a hybrid vehicle;
a control module, which is configured to determine an actual gear of the hybrid vehicle according to the actual gear state signal, and activate a corresponding target rotation speed optimization function according to the actual gear;
a second collecting module, which is configured to collect driving environment parameters as required after the target rotation speed optimization function is activated; and
a correction module, which is configured to calculate a target rotation speed optimization value according to the driving environment parameters, and correct a current target rotation speed of the hybrid vehicle according to the target rotation speed optimization value.

A third aspect of the present invention discloses a hybrid vehicle, which comprises a memory, an automotive electronic controller, and a computer program stored in the memory and executable on the automotive electronic controller, and when the automotive electronic controller executes the computer program, the hybrid vehicle operates with a rotation speed corrected according to the method for optimizing the rotation speed of the hybrid vehicle as described above.

Through one or more of the technical solutions of the present invention, the present invention achieves the following beneficial effects or advantages:
In the solution of the present invention, through activating a corresponding target rotation speed optimization function according to an actual gear of the hybrid vehicle, and, after the target rotation speed optimization function is activated, collecting driving environment parameters as required to calculate a target rotation speed optimization value for correcting a target rotation speed, the target rotation speed control can be adaptively adjusted according to different driving conditions, thereby addressing rotation speed control requirements under various actual operating conditions.

The above description is only an overview of the technical solutions of the present invention, in order to more clearly understand the technical means of the present invention so that the present invention can be implemented according to the contents of the specification, and in order to make the above and other objectives, features, and advantages of the present invention more apparent, specific embodiments of the present invention are described below.

### Brief Description of the Drawings

Various other advantages and benefits will become apparent to those skilled in the art upon reading the detailed description of the preferred embodiments below. The drawings are provided only for the purpose of illustrating the preferred embodiments and are not intended to limit the present invention. Moreover, throughout the drawings, the same reference numerals denote the same components. In the figures:
Fig. 1 is a schematic diagram of a hardware structure according to an embodiment of the present invention;
Fig. 2 is a flowchart of a method for optimizing a rotation speed of a hybrid vehicle according to an embodiment of the present invention;
Fig. 3 is a schematic diagram illustrating execution logic of a target rotation speed optimization function according to an embodiment of the present invention;
Fig. 4 is a schematic diagram illustrating execution logic of a rotation speed optimization function for a forward gear D according to an embodiment of the present invention;
Fig. 5 is a schematic diagram illustrating execution logic of a target rotation speed optimization function for a parking gear P or a neutral gear N according to an embodiment of the present invention;
Fig. 6 is a schematic diagram illustrating target rotation speed compensation after implementing rotation speed optimization of a hybrid vehicle according to an embodiment of the present invention;
Fig. 7 is a schematic diagram of a system for optimizing a rotation speed of a hybrid vehicle according to an embodiment of the present invention.

### Detailed Description of the Embodiments

The exemplary embodiments of the present invention will be described in more detail below with reference to the drawings. Although exemplary embodiments of the present invention are shown in the drawings, it should be understood that the present invention can be implemented in various forms and should not be limited to the embodiments described herein. On the contrary, these embodiments are provided so that the present invention can be more thoroughly understood and the scope of the present invention can be fully conveyed to those skilled in the art.

In a first aspect, embodiments of the present specification provide a method for optimizing a rotation speed of a hybrid vehicle, which is mainly applied to an ECVT power-split mode, but is not limited thereto. It should be noted that the method for optimizing the rotation speed of the hybrid vehicle applies corresponding compensation to a target rotation speed according to the actual driving conditions of the hybrid vehicle on the basis of obtaining the target rotation speed, such that the target rotation speed control can be adaptively adjusted according to different driving conditions, thereby addressing rotation speed control requirements under various actual operating conditions.

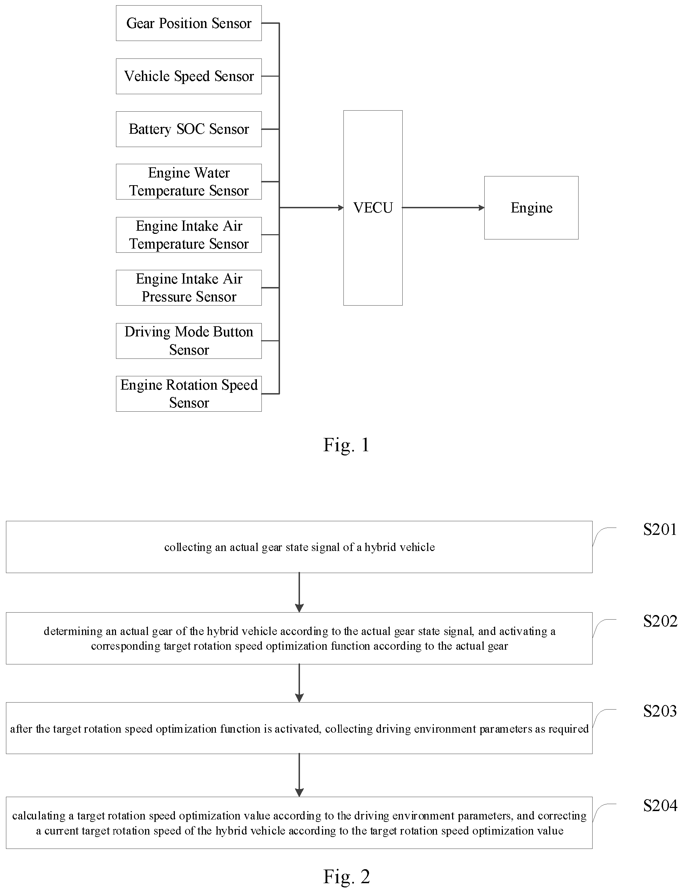

To describe and explain the present invention, reference is first made to Fig. 1, which illustrates a schematic diagram of a hardware structure of the present invention. The hardware structure of the present invention comprises a vehicle electronic control unit (VECU), an engine, and various sensors. The VECU is connected, on one hand, to a vehicle speed sensor, a state-of-charge (SOC) sensor of a battery management system, an engine water (coolant) temperature sensor, an engine intake air temperature sensor, an engine intake air pressure sensor, a driving mode button sensor, an engine rotation speed sensor, and a gear position sensor; and on the other hand, to the engine.

In a specific implementation process, the VECU first performs an operation of obtaining a target rotation speed, and then implements the method for optimizing the rotation speed of a hybrid vehicle according to the present invention to obtain a target rotation speed optimization value and apply compensation to the target rotation speed. Subsequently, the VECU sends a target rotation speed signal to the engine so that the engine performs corresponding actions, thereby realizing rotation speed control.

The above describes the basic logic of rotation speed control of the present invention. Based on the above basic logic, as shown in Fig. 2, a flowchart of a method for optimizing a rotation speed of a hybrid vehicle according to an embodiment of the present specification is provided. The method comprises the following steps S201 to S204:
S201. An actual gear state signal of a hybrid vehicle is collected.

The gears typically provided in the hybrid vehicle comprise four types: a forward gear D, a neutral gear N, a reverse gear R, and a parking gear P. Different gears have different target rotation speed demands and different target rotation speed optimization control logics. By way of example, if the hybrid vehicle is in the forward gear D, the target rotation speed is required to be corrected in combination with the actual driving environment of the hybrid vehicle and according to a first target rotation speed optimization control logic, so as to maximize the target rotation speed. In this case, the driving environment parameters of the actual driving environment of the hybrid vehicle comprise: an actual vehicle speed, an actual wheel-side torque, an actual state-of-charge of a power battery, an actual engine water temperature, an actual engine intake air temperature, an actual engine intake air pressure, and an actual driving mode. If the hybrid vehicle is in the neutral gear N or the parking gear P, the target rotation speed is corrected according to a second target rotation speed optimization control logic through utilizing the actual state-of-charge of the power battery and the actual vehicle speed. The first target rotation speed optimization control logic and the second target rotation speed optimization control logic are different, and the two target rotation speed optimization control logics will be described in detail below and will not be repeated herein.

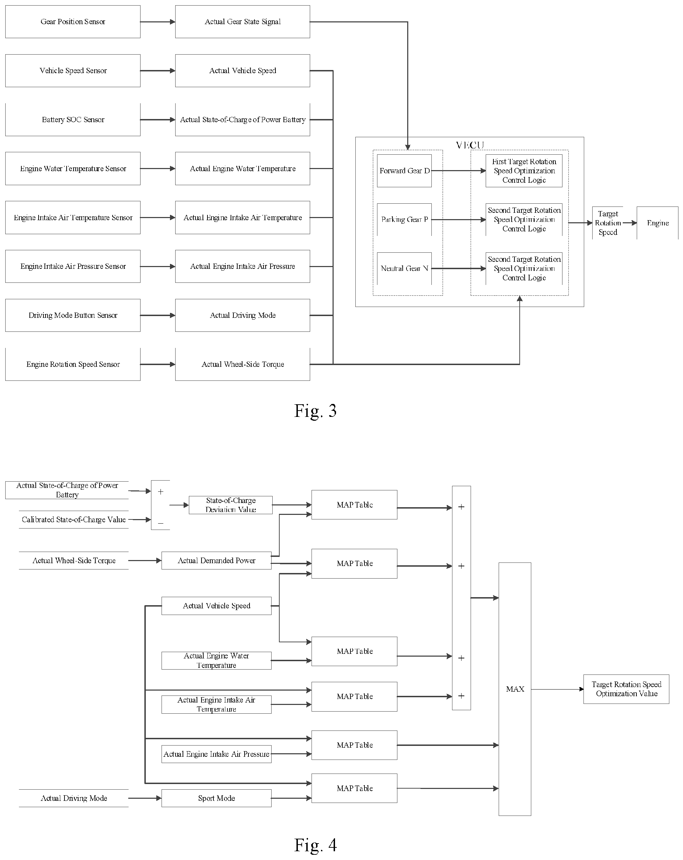

Referring to Fig. 3, a schematic diagram illustrating execution logic of a target rotation speed optimization function is provided. During collecting of the actual gear state signal, a gear position sensor is adopted to collect the signal and transmit it to the VECU, such that the VECU obtains the actual gear state signal. Different actual gear state signals are configured to activate different target rotation speed optimization functions. This will be described in detail below and will not be repeated herein.

After the actual gear state signal is obtained, S202 of performing an activation operation can be executed.

S202. An actual gear of the hybrid vehicle is determined according to the actual gear state signal, and a corresponding target rotation speed optimization function is activated according to the actual gear.

Specifically, different gears have respective gear state signals. When the actual gear state signal of the hybrid vehicle is collected, the actual gear in which the hybrid vehicle is currently operating can be determined according to the actual gear state signal. By way of example, if the actual gear state signal is signal 1, it indicates that the current gear is a forward gear D; if the actual gear state signal is signal 2, it indicates that the current gear is a parking gear P; if the actual gear state signal is signal 3, it indicates that the current gear is a neutral gear N; and the like.

Further, since different gears are configured with different target rotation speed optimization control functions, different gears may activate corresponding target rotation speed optimization control logics, so as to execute the corresponding target rotation speed optimization function for the actual gear. Through performing targeted optimization on the target rotation speed, the engine target rotation speed can be adaptively adjusted based on different scenario requirements, thereby addressing rotation speed control requirements under various actual operating conditions.

Referring to Table 1, a correspondence relationship among the actual gear state signal, the actual gear, the target rotation speed optimization function, and the driving environment parameters is exemplarily disclosed.

**Table 1**

| Actual gear state signal | Actual gear | Target rotation speed optimization function | Driving environment parameters |
|---|---|---|---|
| Signal 1 | Forward gear D | First target rotation speed optimization control logic | Actual vehicle speed, actual wheel-side torque, actual state-of-charge of a power battery, actual engine water temperature, actual engine intake air temperature, actual engine intake air pressure, actual driving mode |
| Signal 2 | Parking gear P | Second target rotation speed optimization control logic | Actual vehicle speed, actual state-of-charge of a power battery |
| Signal 3 | Neutral gear N | Second target rotation speed optimization control logic | Actual vehicle speed, actual state-of-charge of a power battery |

In Table 1, different target rotation speed optimization functions are configured with different target rotation speed optimization control logics. The first target rotation speed optimization control logic is mainly configured to balance rotation speed demands from a power consumption perspective, a power performance perspective, and a comprehensive quality evaluation NVH perspective, so as to output a reasonable engine target rotation speed in a comprehensive manner. The second target rotation speed optimization control logic mainly considers the power consumption aspect, and corrects the engine target rotation speed according to the actual state-of-charge of the power battery.

S203. After the target rotation speed optimization function is activated, driving environment parameters are collected as required.

Specifically, different target rotation speed optimization functions use different driving environment parameters. Referring to Table 1, if the target rotation speed optimization function is a rotation speed optimization function for a forward gear D, first driving environment parameters are used. The first driving environment parameters comprise: an actual vehicle speed, an actual wheel-side torque, an actual state-of-charge of a power battery, an actual engine water temperature, an actual engine intake air temperature, an actual engine intake air pressure, and an actual driving mode. If the target rotation speed optimization function is a rotation speed optimization function for a parking gear P or a neutral gear N, second driving environment parameters are used. The second driving environment parameters comprise: an actual vehicle speed and an actual state-of-charge of a power battery.

In the implementation process of collecting the driving environment parameters as required, if the target rotation speed optimization function is the rotation speed optimization function for the forward gear D, the first driving environment parameters are collected. If the target rotation speed optimization function is the rotation speed optimization function for the parking gear P or the neutral gear N, the second driving environment parameters are collected.

Further, the above driving environment parameters are collected by means of sensors arranged at corresponding positions and are transmitted to the VECU. Further referring to Fig. 3, a gear position sensor collects an actual gear state signal and transmits it to the VECU to activate a corresponding rotation speed optimization function. For different target rotation speed optimization functions, relevant sensors among a vehicle speed sensor, a state-of-charge sensor in a battery management system, an engine water temperature sensor, an engine intake air temperature sensor, an engine intake air pressure sensor, a driving mode button sensor, and an engine rotation speed sensor are selectively invoked as required to collect corresponding actual driving parameters comprising the actual vehicle speed, the actual state-of-charge of the power battery, the actual engine water temperature, the actual engine intake air temperature, the actual engine intake air pressure, the actual driving mode, and the actual wheel-side torque, and to calculate a corresponding target rotation speed optimization value.

S204. A target rotation speed optimization value is calculated according to the driving environment parameters, and a current target rotation speed of the hybrid vehicle is corrected according to the target rotation speed optimization value.

Different target rotation speed optimization functions correspond to different target rotation speed optimization control logics. If the target rotation speed optimization function is the rotation speed optimization function for the forward gear D, the first target rotation speed optimization control logic is executed. If the target rotation speed optimization function is the rotation speed optimization function for the parking gear P or the neutral gear N, the second target rotation speed optimization control logic is executed.

During the execution of the first target rotation speed optimization control logic, a power consumption-related rotation speed optimization value, a power-related rotation speed optimization value, and a quality evaluation-related rotation speed optimization value are calculated based on the first driving environment parameters. The power consumption-related rotation speed optimization value performs rotation speed optimization from the power consumption perspective, the power-related rotation speed optimization value performs rotation speed optimization from the power performance perspective, and the quality evaluation-related rotation speed optimization value performs rotation speed optimization from the NVH perspective. The target rotation speed optimization value is determined from the power consumption-related rotation speed optimization value, the power-related rotation speed optimization value, and the quality evaluation-related rotation speed optimization value.

Specifically, target rotation speed control at different perspectives has different focuses. For example, at the power consumption perspective, the target rotation speed control focuses on fuel consumption. At the power performance perspective, the target rotation speed control focuses on compensating for the delayed response of the engine. In particular, in high-altitude regions, due to boost characteristics, the engine torque exhibits a delayed response, and the engine rotation speed needs to be increased to improve the response, so that the engine operating point needs to be located in a high torque and high rotation speed region. At the NVH perspective, the focus is on noise optimization. However, for the rotation speed optimization function for the forward gear D, the existing technology cannot comprehensively balance rotation speed demands at different perspectives to optimize the target rotation speed control. For this purpose, after determining the target rotation speed, the present application integrates rotation speed demands from different perspectives to obtain a target rotation speed optimization value, and integrates the same into the target rotation speed in a rotation speed correction manner so as to output a reasonable engine target rotation speed, thereby covering rotation speed demands under actual scenarios of the hybrid vehicle, such as excessively low rotation speed under normal temperature conditions, insufficient power at high altitude, or poor NVH experience caused by excessively high engine rotation speed.

In the implementation process of calculating the power consumption-related rotation speed optimization value, a power compensation rotation speed optimization value, a water temperature compensation rotation speed optimization value, and an air temperature compensation rotation speed optimization value are calculated through respectively utilizing the actual wheel-side torque, the actual engine water temperature, and the actual engine intake air temperature in combination with the actual vehicle speed. Further, a state-of-charge compensation rotation speed optimization value is calculated through utilizing a state-of-charge deviation value between the actual state-of-charge of the power battery and a calibrated state-of-charge value. The power compensation rotation speed optimization value, the water temperature compensation rotation speed optimization value, the air temperature compensation rotation speed optimization value, and the state-of-charge compensation rotation speed optimization value are summed, so as to comprehensively obtain the power consumption-related rotation speed optimization value from perspectives of power compensation, water temperature compensation, air temperature compensation, and state-of-charge compensation.

Referring to Fig. 4, a schematic diagram illustrating execution logic of a rotation speed optimization function for a forward gear D is provided. Based on Fig. 4, the implementation process of the rotation speed optimization values corresponding to respective parameters is described in detail below.
1. In terms of power compensation, an actual demanded power is calculated according to the actual vehicle speed and the actual wheel-side torque; and the power compensation rotation speed optimization value is obtained from a prestored rotation speed mapping relationship according to the actual vehicle speed and the actual demanded power. Specifically, the prestored rotation speed mapping relationship is implemented in the form of a MAP table, and the MAP table is queried based on the vehicle speed and the actual demanded power to obtain a corresponding power compensation rotation speed optimization value. When the actual demanded power increases, the power compensation rotation speed optimization value increases, thereby adaptively increasing the target rotation speed; when the actual demanded power decreases, the power compensation rotation speed optimization value decreases, thereby adaptively reducing the target rotation speed, so as to ensure that the engine operating condition is located in an economic region and to satisfy fuel consumption requirements at a power consumption perspective.
2. In terms of water temperature compensation, the water temperature compensation rotation speed optimization value is obtained from a prestored rotation speed mapping relationship according to the actual vehicle speed and the actual engine water temperature. Specifically, the prestored rotation speed mapping relationship is implemented in the form of a MAP table, and the MAP table is queried based on the vehicle speed and the actual engine water temperature to obtain a corresponding water temperature compensation rotation speed optimization value. When the actual engine water temperature increases, the water temperature compensation rotation speed optimization value increases, thereby adaptively increasing the target rotation speed, reducing heat loss generated by the engine, and suppressing the rising trend of the water temperature. Specifically, since the engine generates greater heat loss under conditions of low rotation speed and high torque, when the actual engine water temperature increases, the target rotation speed is adaptively increased so as to appropriately increase the engine rotation speed, thereby reducing the heat loss generated by the engine. When the actual engine water temperature decreases, the water temperature compensation rotation speed optimization value decreases, thereby adaptively reducing the target rotation speed, such that the target rotation speed is maintained at a low rotation speed, ensuring that the engine operating condition is located in a low power consumption region and satisfying requirements at a power consumption perspective.
3. In terms of air temperature compensation, the air temperature compensation rotation speed optimization value is obtained from a prestored rotation speed mapping relationship according to the actual vehicle speed and the actual engine intake air temperature. Specifically, the prestored rotation speed mapping relationship is implemented in the form of a MAP table, and the MAP table is queried based on the vehicle speed and the actual engine intake air temperature to obtain a corresponding air temperature compensation rotation speed optimization value. When the actual engine intake air temperature increases, the air temperature compensation rotation speed optimization value increases, thereby adaptively increasing the target rotation speed, reducing heat loss generated by the engine, and suppressing the rising trend of the air temperature. Specifically, since the engine generates greater heat loss under conditions of low rotation speed and high torque, when the actual engine intake air temperature increases, the target rotation speed is adaptively increased so as to appropriately increase the engine rotation speed, thereby reducing the heat loss generated by the engine. When the actual engine intake air temperature decreases, the air temperature compensation rotation speed optimization value decreases, thereby adaptively reducing the target rotation speed, such that the target rotation speed is maintained at a low rotation speed, ensuring that the engine operating condition is located in an economic region and satisfying fuel consumption requirements at a power consumption perspective.
4. In terms of state-of-charge compensation, the state-of-charge compensation rotation speed optimization value is obtained from a prestored rotation speed mapping relationship according to the state-of-charge deviation value and the actual demanded power. Specifically, the state-of-charge deviation value is calculated through utilizing the actual state-of-charge of the power battery and the calibrated state-of-charge value. The calibrated state-of-charge value is a theoretical state-of-charge value and is set by a system. The prestored rotation speed mapping relationship is implemented in the form of a MAP table, and the MAP table is queried based on the state-of-charge deviation value and the actual demanded power to obtain a corresponding state-of-charge compensation rotation speed optimization value. When the actual state-of-charge of the power battery increases, the state-of-charge deviation value becomes a positive deviation and increases, and the state-of-charge compensation rotation speed optimization value decreases, thereby adaptively reducing the target rotation speed; and when the actual state-of-charge of the power battery decreases, the state-of-charge deviation value becomes a negative deviation and decreases, and the state-of-charge compensation rotation speed optimization value increases, thereby adaptively increasing the target rotation speed, so as to increase engine power and enable the ECVT power-split mode to increase power generation and improve the state-of-charge of the power battery.
5. At the power performance perspective, the power-related rotation speed optimization value is obtained from a prestored rotation speed mapping relationship according to the actual vehicle speed and the actual engine intake air pressure. The prestored rotation speed mapping relationship is implemented in the form of a MAP table, and the MAP table is queried based on the actual vehicle speed and the actual engine intake air pressure to obtain a corresponding power-related rotation speed optimization value, and the power-related rotation speed optimization value is represented in terms of pressure. When the actual engine intake air pressure decreases, it indicates that the hybrid vehicle is operating in a high-altitude region. Due to the boosting characteristics of the engine, a torque response delay may occur. In this case, the power-related rotation speed optimization value increases, thereby adaptively increasing the target rotation speed, enabling engine boosting to improve the vehicle power performance. When the actual engine intake air pressure increases, it indicates that the hybrid vehicle is operating in a plain region. The power-related rotation speed optimization value decreases, thereby adaptively reducing the target rotation speed, so as to avoid excessive rotation speed and resulting NVH issues.
6. At the NVH perspective, the driving modes typically set in the hybrid vehicle comprise three modes: a sport mode, a standard mode, and an economy mode. It is determined whether the actual driving mode is the sport mode. The sport mode has both power performance demands and rotation speed demands at the NVH perspective. If the actual driving mode is the sport mode, the quality evaluation-related rotation speed optimization value is obtained from a prestored rotation speed mapping relationship according to the actual vehicle speed and the actual driving mode. The prestored rotation speed mapping relationship is implemented in the form of a MAP table, and the MAP table is queried based on the actual vehicle speed and the actual driving mode to obtain a corresponding quality evaluation-related rotation speed optimization value. When the actual vehicle speed increases, the quality evaluation-related rotation speed optimization value increases, thereby adaptively increasing the target rotation speed and enabling engine boosting to improve the vehicle power performance; and when the actual vehicle speed decreases, the quality evaluation-related rotation speed optimization value decreases, thereby adaptively reducing the target rotation speed, so as to avoid excessive rotation speed and resulting NVH issues.

Further, if the actual driving mode is the standard mode or the economy mode, the rotation speed optimization at the NVH perspective is not considered. That is, the quality evaluation-related rotation speed optimization value is set to 0, and rotation speed optimization is performed only from the power consumption perspective and the power performance perspective.

After obtaining the power consumption-related rotation speed optimization value, the power-related rotation speed optimization value, and the quality evaluation-related rotation speed optimization value, the maximum value among the power consumption-related rotation speed optimization value, the power-related rotation speed optimization value, and the quality evaluation-related rotation speed optimization value is determined as the target rotation speed optimization value, so as to optimize the target rotation speed.

In an optional embodiment, in consideration of different rotation speed demands from the power consumption perspective, the power performance perspective, and the NVH perspective, corresponding weights can be assigned to the power consumption perspective, the power performance perspective, and the NVH perspective, and weighted calculation can be performed with respective rotation speed optimization values. After the weighted calculation, the maximum value among the weighted calculation results is determined as the target rotation speed optimization value, so as to optimize the target rotation speed. It should be noted that the configuration of the weights is determined according to the influence degrees of the power consumption perspective, the power performance perspective, and the NVH perspective on the hybrid vehicle, but is not intended to be limiting.

In the technical solution of the embodiments of the present invention, through actively analyzing and correcting the rotation speed in terms of vehicle speed, water temperature, intake air temperature, intake air pressure, state-of-charge deviation, and actual power demand, and through balancing the rotation speed demands from the power consumption perspective, the power performance perspective, and the NVH perspective, the target rotation speed optimization value is obtained to optimize target rotation speed control, thereby enabling a reasonable engine target rotation speed to be output.

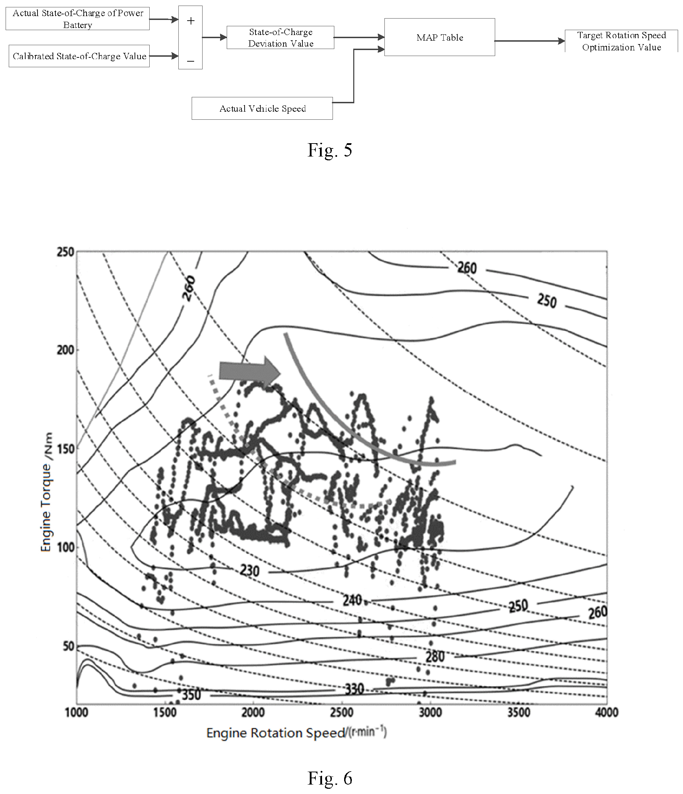

The above relates to the rotation speed optimization function for the forward gear D. Referring to Fig. 5, a schematic diagram illustrating execution logic of a rotation speed optimization function for a parking gear P or a neutral gear N is provided.

In the specific implementation process, if the target rotation speed optimization function is a rotation speed optimization function for a parking gear P or a neutral gear N, a state-of-charge deviation value is calculated based on the actual state-of-charge of the power battery and the calibrated state-of-charge value; and the target rotation speed optimization value is obtained from a prestored rotation speed mapping relationship according to the actual vehicle speed and the state-of-charge deviation value. The calibrated state-of-charge value is a theoretical state-of-charge value and is set by a system. The prestored rotation speed mapping relationship is implemented in the form of a MAP table, and the MAP table is queried based on the state-of-charge deviation value and the actual vehicle speed to obtain a corresponding target rotation speed optimization value. When the actual state-of-charge of the power battery increases, the state-of-charge deviation value becomes a positive deviation and increases, and the target rotation speed optimization value decreases, thereby adaptively reducing the target rotation speed; and when the actual state-of-charge of the power battery decreases, the state-of-charge deviation value becomes a negative deviation and decreases, and the target rotation speed optimization value increases, thereby adaptively increasing the target rotation speed, so as to increase engine power and enable the ECVT power-split mode to increase power generation and improve the state-of-charge of the power battery.

In the technical solution of the embodiments of the present invention, different gears are configured with different target rotation speed optimization control logics. A corresponding rotation speed optimization function is activated according to the actual gear of the hybrid vehicle, and a corresponding target rotation speed optimization value is calculated in combination with the actual driving environment, so as to output a reasonable target rotation speed to control the operation of the hybrid vehicle, enabling adaptive adjustment according to different driving conditions and thereby addressing rotation speed control requirements under various actual operating conditions.

In an optional embodiment, the specific correction manner of the target rotation speed is as follows: the target rotation speed optimization value is added to the current target rotation speed, the final target rotation speed is the sum of the target rotation speed optimization value and the current target rotation speed, so as to improve the target rotation speed in a rotation speed compensation manner. Further, the actual rotation speed and the compensated target rotation speed are real-time checked to implement closed-loop control.

Referring to Fig. 6, a schematic diagram illustrating target rotation speed compensation after implementing rotation speed optimization of a hybrid vehicle. Under the same engine torque condition, the compensated target rotation speed is approximately 2000 r·min⁻¹ higher than the target rotation speed before compensation. Through compensating the rotation speed to increase the target rotation speed, the boost response can be improved, thereby enhancing engine power and making it better suited for operation of the hybrid vehicle under different driving environments.

The above describes the specific implementation process of the method for optimizing the rotation speed of a hybrid vehicle, through activating a corresponding target rotation speed optimization function according to an actual gear of the hybrid vehicle, and, after the target rotation speed optimization function is activated, collecting driving environment parameters as required to calculate a target rotation speed optimization value for correcting a target rotation speed, the target rotation speed control can be adaptively adjusted according to different driving conditions, thereby addressing rotation speed control requirements under various actual operating conditions.

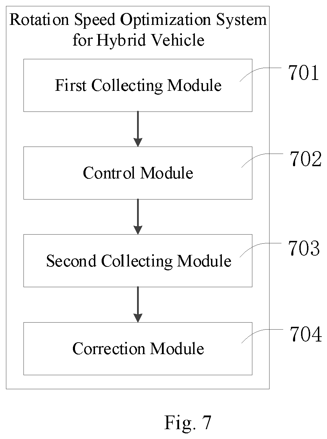

In a second aspect, based on the same inventive concept as the method for optimizing the rotation speed of a hybrid vehicle provided in the embodiments of the first aspect, the embodiments of the present specification further provide a system for optimizing a rotation speed of a hybrid vehicle. Referring to Fig. 7, a schematic diagram of a system for optimizing a rotation speed of a hybrid vehicle provided in the embodiments of the present specification is shown. The system comprises:
a first collecting module 701, which is configured to collect an actual gear state signal of a hybrid vehicle;
a control module 702, which is configured to determine an actual gear of the hybrid vehicle according to the actual gear state signal, and activate a corresponding target rotation speed optimization function according to the actual gear;
a second collecting module 703, which is configured to collect driving environment parameters as required after the target rotation speed optimization function is activated; and
a correction module 704, which is configured to calculate a target rotation speed optimization value according to the driving environment parameters, and correct a current target rotation speed of the hybrid vehicle according to the target rotation speed optimization value.

In an optional embodiment, the second collecting module 703 is specifically configured to:
if the target rotation speed optimization function is a rotation speed optimization function for a forward gear D, collect first driving environment parameters; wherein the first driving environment parameters comprise: an actual vehicle speed, an actual wheel-side torque, an actual state-of-charge of a power battery, an actual engine water temperature, an actual engine intake air temperature, an actual engine intake air pressure, and an actual driving mode.

In an optional embodiment, if the target rotation speed optimization function is a rotation speed optimization function for a forward gear D, the correction module 704 specifically comprises:
a calculation module, which is configured to calculate a power consumption-related rotation speed optimization value, a power-related rotation speed optimization value, and a quality evaluation-related rotation speed optimization value based on the first driving environment parameters; and
a determination module, which is configured to determine the target rotation speed optimization value from the power consumption-related rotation speed optimization value, the power-related rotation speed optimization value, and the quality evaluation-related rotation speed optimization value.

In an optional embodiment, the calculation module is specifically configured to:
respectively utilize the actual wheel-side torque, the actual engine water temperature, and the actual engine intake air temperature in combination with the actual vehicle speed, to calculate a power compensation rotation speed optimization value, a water temperature compensation rotation speed optimization value, and an air temperature compensation rotation speed optimization value;
utilize a state-of-charge deviation value between the actual state-of-charge of the power battery and a calibrated state-of-charge value to calculate a state-of-charge compensation rotation speed optimization value; and
sum the power compensation rotation speed optimization value, the water temperature compensation rotation speed optimization value, the air temperature compensation rotation speed optimization value, and the state-of-charge compensation rotation speed optimization value to obtain the power consumption-related rotation speed optimization value.

In an optional embodiment, the calculation module is specifically configured to:
calculate an actual demanded power according to the actual vehicle speed and the actual wheel-side torque; and
obtain the power compensation rotation speed optimization value from a prestored rotation speed mapping relationship according to the actual vehicle speed and the actual demanded power.

In an optional embodiment, the calculation module is specifically configured to:
obtain the water temperature compensation rotation speed optimization value from a prestored rotation speed mapping relationship according to the actual vehicle speed and the actual engine water temperature.

In an optional embodiment, the calculation module is specifically configured to:
obtain the air temperature compensation rotation speed optimization value from a prestored rotation speed mapping relationship according to the actual vehicle speed and the actual engine intake air temperature.

In an optional embodiment, the calculation module is specifically configured to:
obtain the state-of-charge compensation rotation speed optimization value from a prestored rotation speed mapping relationship according to the state-of-charge deviation value and the actual demanded power.

In an optional embodiment, the step of calculating the power-related rotation speed optimization value based on the first driving environment parameters specifically comprises:
obtaining the power-related rotation speed optimization value from a prestored rotation speed mapping relationship according to the actual vehicle speed and the actual engine intake air pressure.

In an optional embodiment, the step of calculating the quality evaluation-related rotation speed optimization value based on the first driving environment parameters specifically comprises:
determining whether the actual driving mode is a sport mode;
if so, obtaining the quality evaluation-related rotation speed optimization value from a prestored rotation speed mapping relationship according to the actual vehicle speed and the actual driving mode.

In an optional embodiment, the second collecting module 703 is specifically configured to:
if the target rotation speed optimization function is a rotation speed optimization function for a parking gear P or a neutral gear N, collect second driving environment parameters; wherein the second driving environment parameters comprise the actual vehicle speed and the actual state-of-charge of the power battery.

In an optional embodiment, the correction module 704 is specifically configured to:
calculate a state-of-charge deviation value between the actual state-of-charge of the power battery and a calibrated state-of-charge value; and
obtain the target rotation speed optimization value from a prestored rotation speed mapping relationship according to the actual vehicle speed and the state-of-charge deviation value.

In an optional embodiment, the correction module 704 is specifically configured to add the target rotation speed optimization value to the current target rotation speed.

The above describes the specific implementation process of the system for optimizing the rotation speed of a hybrid vehicle, through activating a corresponding target rotation speed optimization function according to an actual gear of the hybrid vehicle, and, after the target rotation speed optimization function is activated, collecting driving environment parameters as required to calculate a target rotation speed optimization value for correcting a target rotation speed, the target rotation speed control can be adaptively adjusted according to different driving conditions, thereby addressing rotation speed control requirements under various actual operating conditions.

It should be noted that the system for optimizing the rotation speed of a hybrid vehicle provided in the embodiments of the present specification has each module perform operations in the specific manner already described in detail in the method embodiments of the first aspect. The specific implementation process can be referred to the method embodiments of the first aspect and will not be described in detail herein.

In an optional embodiment, the system for optimizing the rotation speed of a hybrid vehicle is configured in the VECU in the form of an application program, but is not limited thereto. Of course, the system for optimizing the rotation speed of a hybrid vehicle can also be directly equated to the protection of the VECU, and the method executed in the rotation speed optimization system is equivalent to the method executed in the VECU. The hardware structure of the hybrid vehicle is shown in Fig. 1. The VECU is connected, on one hand, to a vehicle speed sensor, a SOC sensor of a battery management system, an engine water temperature sensor, an engine intake air temperature sensor, an engine intake air pressure sensor, a driving mode button sensor, an engine rotation speed sensor, and a gear position sensor; and on the other hand, to the engine. In a specific implementation process, the VECU first performs an operation of obtaining a target rotation speed. The above sensors collect respective related parameters and transmit them to the VECU. The VECU executes the method provided in the embodiments of the first aspect described above to obtain a target rotation speed optimization value and apply compensation to the target rotation speed. Subsequently, the VECU sends a target rotation speed signal to the engine so that the engine performs corresponding actions, thereby realizing rotation speed control.

In a third aspect, based on the same inventive concept as the method for optimizing the rotation speed of a hybrid vehicle provided in the embodiments of the first aspect, the embodiments of the present specification further provides a hybrid vehicle, comprising a memory, an automotive electronic controller, and a computer program stored in the memory and executable on the automotive electronic controller, and when the automotive electronic controller executes the computer program, the hybrid vehicle performs the rotation speed optimization method as described above.

It should be noted that the hybrid vehicle provided in the embodiments of the present specification has each module perform operations in the specific manner already described in detail in the method embodiments of the first aspect. The specific implementation process can be referred to the method embodiments of the first aspect and will not be described in detail herein.

Even though the preferred embodiments of the present application have been described, those skilled in the art, once aware of the underlying inventive concept, can make various modifications and changes to these embodiments. Therefore, the appended claims are intended to be construed to comprise the preferred embodiments as well as all changes and modifications falling within the scope of the present application.

Obviously, those skilled in the art can make various modifications and variations to the present application without departing from its spirit and scope of the present application. Thus, in the event that these modifications and variations of the present application are within the protection scope of the claims and the equivalents thereof, the present application also intends to comprise such modifications and variations.

## Claims

1. A method for optimizing a rotation speed of a hybrid vehicle, comprising:
collecting an actual gear state signal of a hybrid vehicle;
determining an actual gear of the hybrid vehicle according to the actual gear state signal, and activating a corresponding target rotation speed optimization function according to the actual gear;
after the target rotation speed optimization function is activated, collecting driving environment parameters as required; and
calculating a target rotation speed optimization value according to the driving environment parameters, and correcting a current target rotation speed of the hybrid vehicle according to the target rotation speed optimization value.

2. The method according to claim 1, wherein after the target rotation speed optimization function is activated, the step of collecting driving environment parameters as required specifically comprises:
if the target rotation speed optimization function is a rotation speed optimization function for a forward gear D, collecting first driving environment parameters; wherein the first driving environment parameters comprise: an actual vehicle speed, an actual wheel-side torque, an actual state-of-charge of a power battery, an actual engine water temperature, an actual engine intake air temperature, an actual engine intake air pressure, and an actual driving mode.

3. The method according to claim 2, wherein if the target rotation speed optimization function is the rotation speed optimization function for the forward gear D, the step of calculating the target rotation speed optimization value according to the driving environment parameters specifically comprises:
calculating a power consumption-related rotation speed optimization value, a power-related rotation speed optimization value, and a quality evaluation-related rotation speed optimization value based on the first driving environment parameters; and
determining the target rotation speed optimization value from the power consumption-related rotation speed optimization value, the power-related rotation speed optimization value, and the quality evaluation-related rotation speed optimization value.

4. The method according to claim 3, wherein the step of calculating the power consumption-related rotation speed optimization value based on the first driving environment parameters specifically comprises:
respectively utilizing the actual wheel-side torque, the actual engine water temperature, and the actual engine intake air temperature in combination with the actual vehicle speed to calculate a power compensation rotation speed optimization value, a water temperature compensation rotation speed optimization value, and an air temperature compensation rotation speed optimization value;
utilizing a state-of-charge deviation value between the actual state-of-charge of the power battery and a calibrated state-of-charge value to calculate a state-of-charge compensation rotation speed optimization value; and
summing the power compensation rotation speed optimization value, the water temperature compensation rotation speed optimization value, the air temperature compensation rotation speed optimization value, and the state-of-charge compensation rotation speed optimization value to obtain the power consumption-related rotation speed optimization value.

5. The method according to claim 4, wherein the step of respectively utilizing the actual wheel-side torque, the actual engine water temperature, and the actual engine intake air temperature in combination with the actual vehicle speed to calculate a power compensation rotation speed optimization value, a water temperature compensation rotation speed optimization value, and an air temperature compensation rotation speed optimization value specifically comprises:
calculating an actual demanded power according to the actual vehicle speed and the actual wheel-side torque; and
obtaining the power compensation rotation speed optimization value from a prestored rotation speed mapping relationship according to the actual vehicle speed and the actual demanded power.

6. The method according to claim 4, wherein the step of respectively utilizing the actual wheel-side torque, the actual engine water temperature, and the actual engine intake air temperature in combination with the actual vehicle speed to calculate the power compensation rotation speed optimization value, the water temperature compensation rotation speed optimization value, and the air temperature compensation rotation speed optimization value specifically comprises:
obtaining the water temperature compensation rotation speed optimization value from a prestored rotation speed mapping relationship according to the actual vehicle speed and the actual engine water temperature.

7. The method according to claim 4, wherein the step of respectively utilizing the actual wheel-side torque, the actual engine water temperature, and the actual engine intake air temperature in combination with the actual vehicle speed to calculate the power compensation rotation speed optimization value, the water temperature compensation rotation speed optimization value, and the air temperature compensation rotation speed optimization value specifically comprises:
obtaining the air temperature compensation rotation speed optimization value from a prestored rotation speed mapping relationship according to the actual vehicle speed and the actual engine intake air temperature.

8. The method according to claim 4, wherein the step of utilizing the state-of-charge deviation value between the actual state-of-charge of the power battery and the calibrated state-of-charge value to calculate the state-of-charge compensation rotation speed optimization value specifically comprises:
obtaining the state-of-charge compensation rotation speed optimization value from a prestored rotation speed mapping relationship according to the state-of-charge deviation value and the actual demanded power.

9. The method according to claim 3, wherein the step of calculating the power-related rotation speed optimization value based on the first driving environment parameters specifically comprises:
obtaining the power-related rotation speed optimization value from a prestored rotation speed mapping relationship according to the actual vehicle speed and the actual engine intake air pressure.

10. The method according to claim 3, wherein the step of calculating the quality evaluation-related rotation speed optimization value based on the first driving environment parameters specifically comprises:
determining whether the actual driving mode is a sport mode;
if so, obtaining the quality evaluation-related rotation speed optimization value from a prestored rotation speed mapping relationship according to the actual vehicle speed and the actual driving mode.

11. The method according to claim 1, wherein after the target rotation speed optimization function is activated, the step of collecting driving environment parameters as required specifically comprises:
if the target rotation speed optimization function is a rotation speed optimization function for a parking gear P or a neutral gear N, collecting second driving environment parameters; wherein the second driving environment parameters comprise: an actual vehicle speed and an actual state-of-charge of a power battery.

12. The method according to claim 11, wherein if the target rotation speed optimization function is the rotation speed optimization function for the parking gear P or the neutral gear N, the step of calculating the target rotation speed optimization value according to the driving environment parameters specifically comprises:
calculating a state-of-charge deviation value between the actual state-of-charge of the power battery and a calibrated state-of-charge value; and
obtaining the target rotation speed optimization value from a prestored rotation speed mapping relationship according to the actual vehicle speed and the state-of-charge deviation value.

13. The method according to claim 1, wherein the step of correcting the current target rotation speed of the hybrid vehicle according to the target rotation speed optimization value specifically comprises:
adding the target rotation speed optimization value to the current target rotation speed.

14. A system for optimizing a rotation speed of a hybrid vehicle, comprising:
a first collecting module, which is configured to collect an actual gear state signal of a hybrid vehicle;
a control module, which is configured to determine an actual gear of the hybrid vehicle according to the actual gear state signal, and activate a corresponding target rotation speed optimization function according to the actual gear;
a second collecting module, which is configured to collect driving environment parameters as required after the target rotation speed optimization function is activated; and
a correction module, which is configured to calculate a target rotation speed optimization value according to the driving environment parameters, and correct a current target rotation speed of the hybrid vehicle according to the target rotation speed optimization value.

15. A hybrid vehicle, comprising a memory, an automotive electronic controller, and a computer program stored in the memory and executable on the automotive electronic controller, wherein when the automotive electronic controller executes the computer program, the hybrid vehicle performs the method according to any one of claims 1 to 13.
